# EUROPEAN PATENT APPLICATION

(11) **EP 3 373 617 A1**
(43) Date of publication of application: **12.09.2018**
(21) Application number: 17197998.2
(22) Date of filing: 24.10.2017
(51) Int. Cl.: H04W 8/00, H04W 4/80

(54) **OUT-OF-BAND RADIO**

(30) Priority: 09.03.2017 US 201715455112
(71) Applicant: Aruba Networks, Inc., Santa Clara, CA 95054 (US)
(72) Inventor: KOUNDINYA, Shruthi, Santa Clara, California 95054 (US); KAMTHE, Ankur, Santa Clara, California 95054 (US)
(74) Representative: Haseltine Lake LLP

(57) **Abstract**

Example implementations relate to an out-of-band radio. In some examples, an apparatus may comprise an out-of-band radio and a processing resource coupled to the out-of-band radio. The processing resource may execute instructions to transmit information associated with the apparatus and receive information associated with a neighboring network device. In some examples, the processing resource may execute instructions to determine characteristics of a radio-frequency neighborhood of the apparatus based on the information associated with the neighboring network device.

## Description

### Background

Wireless networks may provide various types of communication to multiple users through the air using electromagnetic waves. As a result, various types of communication may be provided to users without cables, wires, or other physical electric conductors to couple devices in the wireless network. Examples of the various types of communication that may be provided by wireless networks include voice communication, data communication, multimedia services, etc. Wireless networks may include access points (APs), which may communicate with each other to detect other APs and/or user devices.

### Brief Description of the Drawings

Figure 1 illustrates a diagram of a plurality of out-of-band radios consistent with the disclosure.
Figure 2 illustrates a diagram of a plurality of out-of-band radios exchanging information consistent with the disclosure.
Figure 3 illustrates an example flow diagram for an out-of-band radio consistent with the disclosure.
Figure 4 illustrates another example of a flow diagram for an out-of-band radio consistent with the disclosure.
Figure 5 illustrates an example of an apparatus including an out-of-band radio consistent with the disclosure.
Figure 6 illustrates an example of a system including an out-of-band radio consistent with the disclosure.
Figure 7 illustrates a diagram of an example of a non-transitory computer readable medium for an out-of-band radio consistent with the disclosure.
Figure 8 illustrates an example flow diagram of an example of a method for an out-of-band radio consistent with the disclosure.

### Detailed Description

An example of a wireless network is a wireless local area network (WLAN). As used herein, the term "wireless local area network (WLAN)" can, for example, refer to a communications network that links two or more devices using some wireless distribution method (for example, spread-spectrum or orthogonal frequency-division multiplexing radio), and usually providing a connection through an access point to the Internet; and thus, providing users with the mobility to move around within a local coverage area and still stay connected to the network. WLANs may include multiple stations (STAs), controllers (e.g., WLAN controller(s)), and/or access points (APs) that may communicate over wireless channels. An AP may be a networking hardware device that allows a wireless-compliant device (e.g., a STA) to connect to a network, while a controller may perform configuration operations and/or authentication operations on APs and/or STAs.

The STAs and/or APs may include a radio to communicate and/or exchange information over the wireless channels. As used herein, the term "information" can, for example, refer to data, address, control, management (e.g., statistics) or any combination thereof. For transmission, information may be transmitted as a message, namely a collection of bits in a predetermined format. One type of message, namely a wireless message, includes a header and payload data having a predetermined number of bits of information. The wireless message may be placed in a format such as packets, frames, or cells. As used herein, the term "radio" can, for example, refer to an antenna or aerial which converts electric power into electromagnetic waves and vice versa.

An AP may provide connectivity with a network such as the Internet to the STAs. As used herein, the term "AP" can, for example, refer to receiving points for any known or convenient wireless technology which may later become known. Specifically, the term AP is not intended to be limited to Institute of Electrical and Electronics Engineers (IEEE) 802.11-based APs. APs generally function as an electronic device that is adapted to allow wireless devices to connect to a wired network via various communications standards. As used herein, the term "STA" can, for example, refer to a device that has the capability to use the Institute of Electrical and Electronics Engineers (IEEE) 802.11 protocol. Examples of STAs include smart phones, laptops, physical non-virtualized computing devices, personal digital assistants, etc. In some examples, a STA may be a device that contains an IEEE 802.11-conformant media access control (MAC) and physical layer (PHY) interface to a wireless medium (WM). As used herein, the term "controller" can, for example, refer to a WLAN controller that performs load balancing operations, authentication operations, interference detection and avoidance operations, and/or coverage hole detection and correction operations for the network.

Wireless networks such as WLANs can use various wireless communication technologies. In some examples, WLANs can use orthogonal frequency division multiplexing (OFDM). In an OFDM based wireless network, a data stream is split into multiple data substreams. Such data substreams may be sent over different OFDM subcarriers, which can be referred to as tones or frequency tones. Some wireless networks may use a single-in-single-out (SISO) communication approach, where each STA and/or AP uses a single antenna. Other wireless networks may use a multiple-in-multiple-out (MIMO) communication approach, where a STA and/or AP uses multiple transmit antennas and multiple receive antennas. For example, some wireless networks may include controllers, APs, and/or STAs that may be used to facilitate communication in the network. Such networks may allow for multiple user (MU) MIMO communication. WLANs such as those defined in the IEEE wireless communications standards (e.g., IEEE 802.11 a, IEEE 802.11 n, IEEE 802.11 ac, etc.), can use OFDM to transmit and receive signals. Moreover, WLANs, such as those based on the IEEE 802.11 n or IEEE 802.11 ac standards, can use OFDM and MIMO.

In some examples, APs and/or radios may transmit and/or receive signals to determine information associated with other APs and/or radios that are within a particular geographic area. The particular geographic area may be referred to as a neighborhood or a radio-frequency (RF) neighborhood. Information regarding the APs and/or radios in the RF neighborhood may be determined to, for example, tune parameters associated with the APs, which may allow for increased performance of the network.

In some approaches, neighborhood detection (e.g., determining information regarding the APs in an RF neighborhood) may be accomplished by scanning techniques. For example, over-the-air (OTA) frames may be transmitted on scanned channels to detect the presence of other APs and/or radios in the RF neighborhood. In some approaches, scanning may include causing an AP to alter a channel that it is using to from a home (e.g., an operating) channel, with which the AP is providing data to STAs, to a different channel (e.g., a scanning channel), with which the AP can detect the existence of other APs and/or radios. While using a scanning channel, the AP may detect the existence of the other APs and/or radios through received frames (e.g., received 802.11 frames) such as beacons, probe responses, etc.

In some approaches, the OTA frames are frames that are transmitted by an AP when the AP is transmitting via a scanning channel to send information regarding the AP to other APs in the RF neighborhood. In some approaches, a dedicated radio may be provided solely for the purpose of detecting nearby APs. Information derived from wireless frames may then be used by the AP to change its own settings (e.g., channel, transmit power, receive sensitivity, etc.) to alter the efficacy of the wireless network with respect to STAs connected to that AP, as well as other APs in the RF neighborhood.

However, in some approaches, transmitting OTA frames on a scanning channel may be time consuming because every channel associated with APs in the RF neighborhood may be scanned to detect the presence of the APs in the RF neighborhood. The amount of time spent scanning every channel associated with the APs in the RF neighborhood may be further increased if STAs are associated to the scanning APs home channel.

In some approaches, reducing scanning may yield less accurate RF neighborhood information may be collected than if every channel associated with the APs is scanned, while increasing scanning may result in adverse effects to STA connection to the network. Further, in some approaches, if an amount of time spent scanning a particular channel is insufficient, APs in the RF neighborhood may not be detected. For example, OTA frames that are transmitted may contain a special frame that contains relevant information on an AP's home channel. This frame may be missed if the AP on the same channel is transmitting data or scanning.

In contrast, examples herein utilize an out-of-band radio to exchange RF neighborhood information. This may increase performance of the wireless network as compared to some previous approaches, because 802.11 performance may not be affected since the radio exchanging RF neighborhood information is out-of-band. As used here, the term "out-of-band" can, for example, refer to a radio that operates on a channel that is not used to transmit 802.11 signals. As an example, an out-of-band radio may not transmit and/or receive signals on AP channels 1, 6, and/or 11. In some examples, the out-of-band radio may be a Bluetooth® low energy (BLE) radio.

Examples of the disclosure include apparatuses, methods, and systems for related to an out-of-band radio. In some examples, an apparatus may comprise a processing resource. The processing resource may execute instructions to perform various tasks. For example, the processing resource may execute instructions to transmit information associated with the apparatus, receive information associated with a neighboring network device, and determine characteristics of a radio-frequency neighborhood of the apparatus based on the information associated with the neighboring network device.

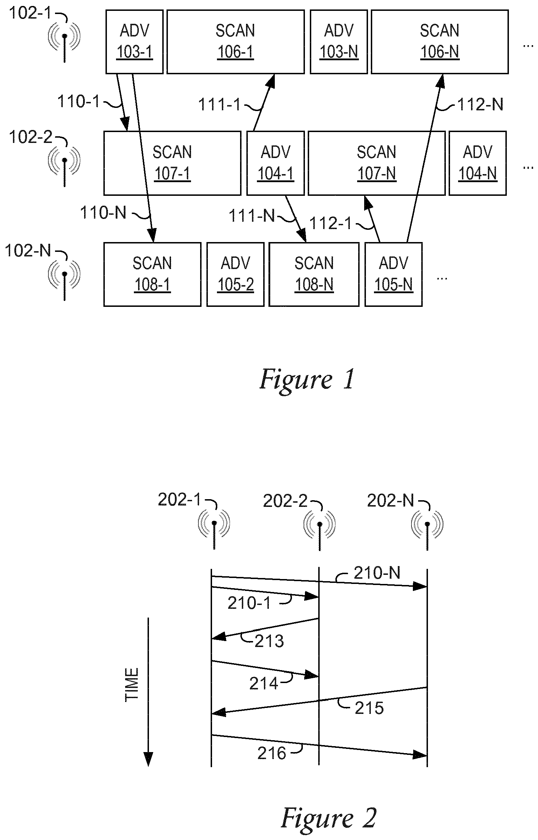

Figure 1 illustrates a diagram of a plurality of out-of-band radios consistent with the disclosure. As shown in Figure 1, a plurality of radios 102-1, ..., 102-N may each receive and/or transmit frames during an advertisement period and may each receive and/or transmit frames during a scanning period. In some examples, frames transmitted during the advertisement period(s) 103 may be transmitted as a broadcast message as opposed to a unicast message. The radios may be out-of-band radios, for example, out-of-band BLE radios. In some examples, a first radio 102-1 may transmit frames during an advertisement period 103-1, ..., 103-N to the other radios 102-2, ..., 102-N, which may receive the transmitted frames during a scanning period (e.g., 107 for radio 102-2, 108 for radio 102-N, etc.) associated with each respective radio 102-1, ..., 102-N.

In some examples, radio 102-2 may, as indicated by arrow 110-1, receive frames transmitted during an advertisement period 103-1 associated with radio 102-1 during a scanning period 107-1 associated with radio 102-2. Similarly, radio 102-N may, as indicated by arrow 110-N, receive frames transmitted during an advertisement period 103-1 associated with radio 102-1 during a scanning period 108-1 associated with radio 102-2.

Radio 102-2 may, as indicated by arrows 111-1 and 111-N, transmit frames during advertisement period 104-1 to radio 102-1 and radio 102-N, respectively. These frames may be received by radio 102-1 and 102-N during respective scanning periods associated with radio 102-1 and 102-N. For example, radio 102-1 may receive the frames transmitted by radio 102-2 during scanning period 106-1, while radio 102-N may receive the frames transmitted by radio 102-2 during scanning period 108-N.

Radio 102-N may, as indicated by arrows 112-1 and 112-N, transmit frames during advertisement period 105-N to radio 102-2 and radio 102-1, respectively. These frames may be received by radio 102-1 and 102-2 during respective scanning periods associated with radio 102-1 and 102-N. For example, radio 102-1 may receive the frames transmitted by radio 102-N during scanning period 106-N, while radio 102-2 may receive the frames transmitted by radio 102-N during scanning period 107-N.

Figure 2 illustrates a diagram of a plurality of out-of-band radios exchanging information consistent with the disclosure. As shown in Figure 2, a plurality of radios 202-1, ..., 202-N may exchange frames with each other. In some examples, the frames may include information about the RF neighborhood. Radio 202-1 may transmit frames to radio 202-2, as indicated by arrow 210-1, and may transmit frames to radio 202-N, as indicated by arrow 210-N. These frames may be transmitted during an advertisement period associated with radio 202-1.

In some examples, radio 202-2 may transmit a scan request 213 to radio 202-1 responsive to receiving the frames transmitted by radio 202-1 and indicated by arrow 210-1. Responsive to the scan request 213, radio 202-1 may transmit a scan response 214 to radio 202-2. Similarly, radio 202-N may transmit a scan request 215 to radio 202-1 responsive to receiving the frames transmitted by radio 202-1 and indicated by arrow 210-N. Responsive to the scan request 215, radio 202-1 may transmit a scan response 216 to radio 202-N.

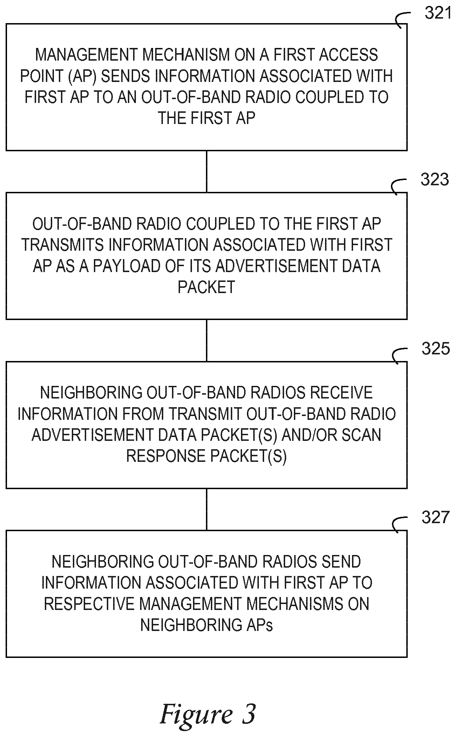

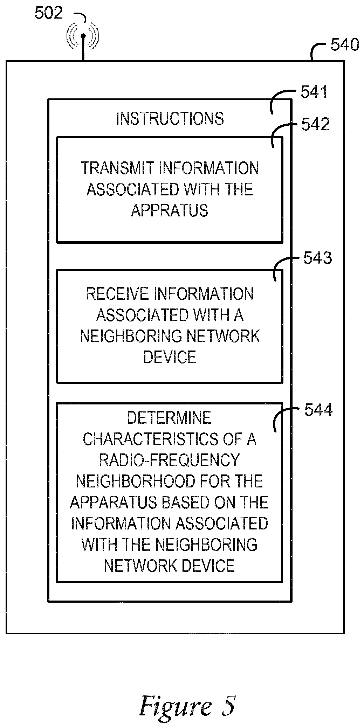

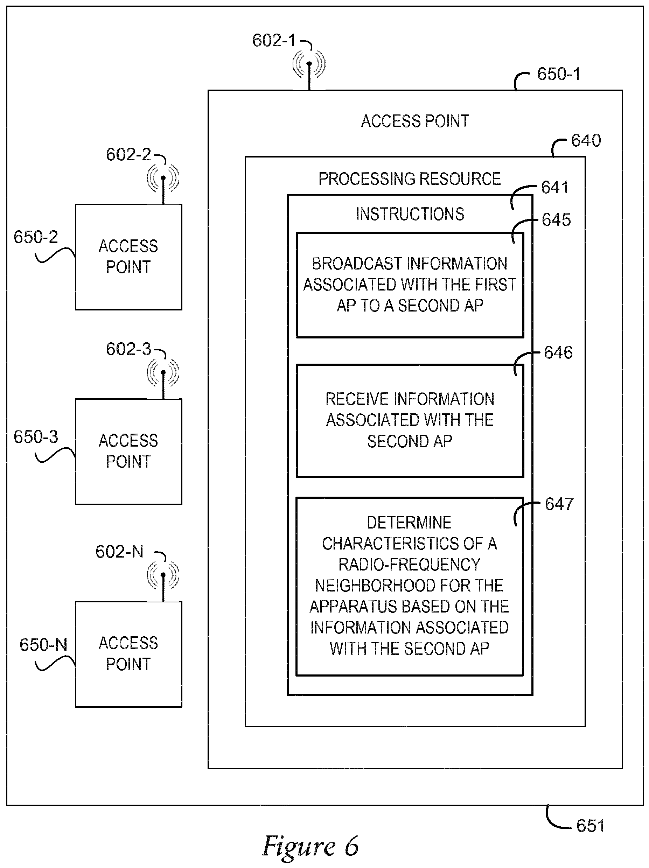

Figure 3 illustrates an example flow diagram for an out-of-band radio consistent with the disclosure. At block 321, a management mechanism on a first AP may send information associated with the first AP to an out-of-band radio coupled to the first AP. As used here, the term "mechanism" can, for example, refer to hardware to execute instructions, logic, application specific integrated circuit(s), etc. The out-of-band radio may be analogous to out-of-band radios 102 illustrated in Figure 1, out-of-band radios 202 illustrated in Figures 2, and/or out-of-band radios 502 and 602 illustrated in Figures 5 and 6, respectively.

As shown at block 323 in Figure 3, the out-of-bound radio coupled to the first AP may transmit information associated with the first AP as, for example, a payload of its advertisement data packet. In some examples, the information transmitted as a payload of the advertising packet may be analogous to the advertisement packets described in Figures 1 and 2, herein.

At block 325, neighboring out-of-band radios may receive information from transmit out-of-band radio advertisement data packet(s) and/or may receive information from transmit out-of-band radio scan response packet(s), as shown in Figures 1 and 2. The out-of-band transmit radio(s) may be coupled to different APs than the first AP that are in a transmitting mode of operation and/or the out-of-band radio(s) may be coupled to APs that are part of a RF neighborhood of the first AP.

As shown at block 327 of Figure 3, neighboring out-of-band radios may send information associated with the first AP to respective management mechanisms on the neighboring APs. For example, information associated with the first AP may be populated to neighboring APs via the neighboring out-of-band radios.

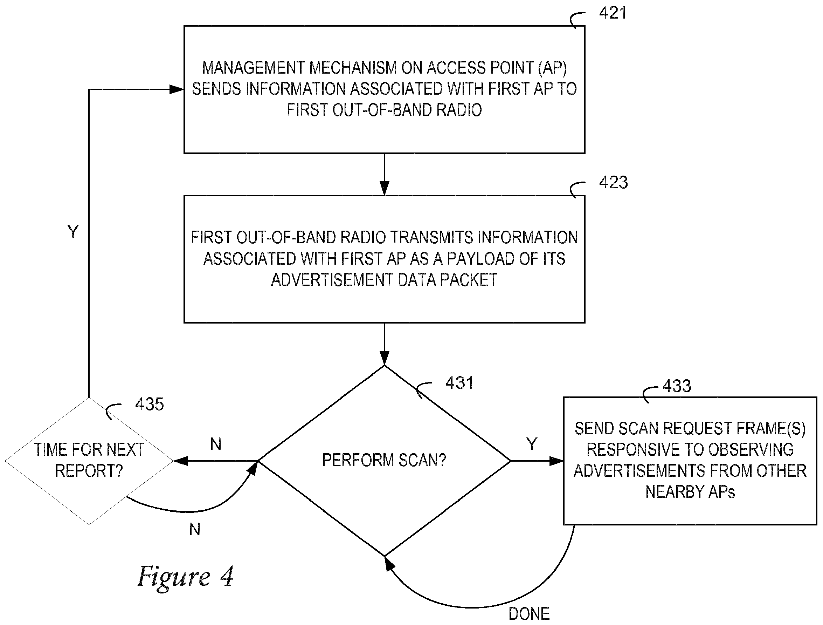

Figure 4 illustrates another example flow diagram for an out-of-band radio consistent with the disclosure. At block 421, a management mechanism on a first AP may send information associated with the first AP to an out-of-band radio coupled to the first AP. The out-of-band radio may be analogous to out-of-band radios 102 illustrated in Figure 1, out-of-band radios 202 illustrated in Figures 2, and/or out-of-band radios 502 and 602 illustrated in Figures 5 and 6, respectively. In addition, the first AP may be analogous to first AP 650-1 illustrated in Figure 6, herein.

As shown at block 423 in Figure 4, the out-of-bound radio coupled to the first AP may transmit information associated with the first AP as, for example, a payload of its advertisement data packet. In some examples, the information transmitted as a payload of the advertising packet may be analogous to the advertisement packets described in Figures 1, 2, and 3, herein.

At block 431 a determination may be made as to whether or not a scan may be performed. For example, a processing resource coupled to the first AP and/or the management mechanism may determine whether a scan is to be performed. If a scan is to be performed, at block 433, a scan request might be transmitted to a nearby AP, eliciting a scan response that may be forwarded to the management mechanism on the first AP. For example, a scan response frame may be sent responsive to observing an advertisement from another nearby AP. The scan response may include additional information regarding a second nearby AP, for example. This may be analogous to AP 202-1 responding, as indicated by arrow 214, to a scan request 213 from AP 202-2, as illustrated in Figure 2. If a scan is not to be performed by the first AP, a determination can be made whether it is time for a next report to be generated and/or sent at block 435. If it is time for a next report to be generated and/or sent, the process may start over again at block 421.

Figure 5 illustrates an example of an apparatus including an out-of-band radio consistent with the disclosure. As shown in Figure 5, the apparatus may include an out-of-band radio 502 coupled to a processing resource 540, which may execute instructions 541. The out-of-band radio may be a Bluetooth® low energy (BLE) out-of-band radio. In some examples, the instructions 541 may be stored on a non-transitory machine readable medium and/or a memory resource. The non-transitory machine readable medium and/or memory resource may be any type of volatile or non-volatile memory or storage, such as random access memory (RAM), flash memory, read-only memory (ROM), storage volumes, a hard disk, or a combination thereof.

At 542, the processing resource 540 may execute instructions 541 to transmit information associated with the apparatus. The information transmitted may include channel usage information associated with the apparatus, equivalent isotropically radiated power information (e.g., the power that would be required to transmit a signal equally in all directions, from a strictly theoretical spherically radiating source) associated with the apparatus, information regarding a transmit power associated with the apparatus, and/or a radio media access control address associated with the apparatus. In some examples, the information associated with the apparatus may be transmitted as part of a beacon frame. For example, the information associated with the apparatus can be transmitted in a header and/or body of the beacon frame. For instance, in some examples, substantially all information to determine characteristic of the radio-frequency neighborhood of the apparatus can be transmitted in a body of a beacon frame.

At 543, the processing resource 540 may execute instructions 541 to receive information associated with a neighboring network device. The information received may include channel usage information associated with the neighboring network device, equivalent isotropically radiated power information associated with the neighboring network device, information regarding a transmit power associated with the neighboring network device, and/or a radio media access control address associated with the neighboring network device. In some examples, the information received may be transmitted from the neighboring network device as part of a beacon frame.

At 544, the processing resource 540 may execute instructions 541 to determine characteristics of a radio-frequency neighborhood for the apparatus based on the information associated with the neighboring network device. Characteristics of the RF neighborhood may include channel usage information, equivalent isotropically radiated power information, transmit power information, and/or radio media access control address information.

Figure 6 illustrates an example of a system including an out-of-band radio consistent with the disclosure. As shown in Figure 6, a plurality of APs 650-1, ..., 650-N are in a wireless network 651. The wireless network may be a wireless local area network, for example. APs among the plurality of APs 650-1, ..., 650-N may include respective Bluetooth® low energy (BLE) out-of-band radios 602-1, ..., 602-N. For example, as shown in Figure 6, a first AP 650-1 may include an out-of-band radio 602-1 coupled thereto, and may include a processing resource 640, which may execute instructions 641. The system may include a plurality of APs 650-2, ..., 650-N, each of which may have a respective out-of-band radio 602-2, ..., 602-N coupled thereto. In some examples, the instructions 641 may be stored on a non-transitory machine readable medium and/or a memory resource. The non-transitory machine readable medium and/or memory resource may be any type of volatile or non-volatile memory or storage, such as random access memory (RAM), flash memory, read-only memory (ROM), storage volumes, a hard disk, or a combination thereof.

At 645, the processing resource 640 may execute instructions 641 to broadcast information associated with the first AP to a second AP. As described above, the information may include channel usage information, equivalent isotropically radiated power information, transmit power information, and/or radio media access control address information.

At 646, the processing resource 640 may execute instructions 641 to receive information associated with the second AP. As described above, the information may include channel usage information, equivalent isotropically radiated power information, transmit power information, and/or radio media access control address information.

At 647, the processing resource 640 may execute instructions 641 to determine characteristics of a radio-frequency neighborhood for the first AP 650-1 based on the information associated with the second AP. Characteristics of the RF neighborhood may include channel usage information, equivalent isotropically radiated power information, transmit power information, and/or radio media access control address information.

In some examples, the processing resource 640 may execute instructions 641 to broadcast information associated with the first AP 650-1 to the second AP 650-2 and another AP (e.g., AP 650-3, AP 650-N, etc.) among the plurality of APs. For example, the processing resource 640 may execute instructions 641 to broadcast information associated with the first AP 650-1 to each AP among a plurality of APs in an RF neighborhood associated with the first AP 650-1.

The processing resource 640 may execute instructions 641 to broadcast information associated with the first AP 650-1 to the second AP 650-2 without transmitting a service announcement frame from the first AP 650-1. In some examples, the processing resource 640 may execute instructions 641 to broadcast information associated with the first AP 650-1 to the second AP 650-2 without connecting the first AP 650-1 to the second AP 650-2. The system may include a scan response/request mechanism that may be used to transmit or broadcast the information associated with the first AP 650-1 to the second AP 650-2 and/or other APs among the plurality of APs.

In some examples, a BLE out-of-band radio 602-1 coupled to the first AP may operate on a channel of the first AP that does not overlap with the first, sixth, or eleventh channel of the first AP. For example, the BLE out-of-band radio 602-1 may transmit and/or receive information on a BLE advertising channel that does not overlap with 802.11 (e.g., Wi-Fi) transmissions on channel 1, 6, or 11 of the first AP.

A BLE radio may have 40 2MHz-wide channels, out of which channels 37, 38 and 39 are used for broadcast transmissions. The BLE radio's operational advertisement channels (e.g., channels 37, 38 and 39), fall in the gaps in between 802.11 channels 1, 6 and 11. In some examples, 802.11 channel 1 may transmit information at around 2,412 MHz, 802.11 channel 6 may transmit information at around 2,437 MHz, and 802.11 channel 11 may transmit information at around 2,462 MHz, while channel 37 may broadcast transmissions at around 2,402 MHz, channel 38 may broadcast transmissions at around 2,426 MHz, and channel 39 may broadcast transmissions at around 2,480 MHz. Accordingly, in some examples, BLE radio transmissions on the advertisement channels may be considered out-of-band with respect to 802.11 transmissions. In some examples, the BLE out-of-band radio 602-1 may transmit and/or receive information on channel 37, 38, and/or 39 of the first AP. Examples are not limited to the BLE out-of-band radio 602-1 operating on particular channels; however, and the BLE out-of-band radios 602-2, ..., 602-N coupled to the other APs 650-2, ..., 650-N may operate on channels 37, 38, and/or 39 of the respective AP to which they are coupled.

In some examples, a BLE out-of-band radio 602-1 coupled to the first AP 650-1 may operate in a channel gap between a Wi-Fi channel of the first AP. For example, the BLE out-of-band radio 602-1 may operate in a channel gap between Wi-Fi channels 1, 6, and/or 11 of the first AP 650-1. Examples of channels that are in the channel gap between a Wi-Fi channel of the first AP 650-1 include channels 37, 38, and/or 39. Examples are not so limited, however, and BLE out-of-band radios 602-2, ..., 602-N coupled to the other APs 650-2, ..., 650-N may operate in any channel gap between a Wi-Fi channel of the AP to which they are coupled. The terms "Wi-Fi channel(s)" and "802.11 channel(s)" are used interchangeably herein.

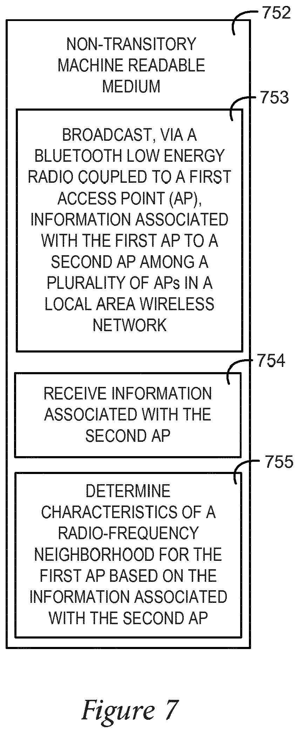

Figure 7 illustrates a diagram of an example of a non-transitory computer readable medium for an out-of-band radio consistent with the disclosure. A computer processor (e.g., a hardware processing resource) may execute instructions stored on the non-transitory machine readable medium 752. The non-transitory machine readable medium 752 may be any type of volatile or non-volatile memory or storage, such as random access memory (RAM), flash memory, read-only memory (ROM), storage volumes, a hard disk, or a combination thereof.

The example medium 752 may store instructions 753 executable by a computer processor to broadcast, via a BLUETOOTH low energy (BLE) out-of-band radio coupled to a first AP, information associated with the first AP to a second AP among a plurality of APs in a local area wireless network. In some examples, the BLE out-of-band radio coupled to the first AP may operate on an out-of-band channel of the first AP. For example, the BLE out-of-band radio coupled to the first AP may operate in a channel gap between a first Wi-Fi channel and a second Wi-Fi channel of the first AP.

The example medium 752 may store instructions 754 executable by a computer processor to receive information associated with the second AP. As described above, the information associated with the first AP and/or the information associated with the second AP may include channel usage information, equivalent isotropically radiated power information, transmit power information, and/or radio media access control address information.

The example medium 752 may store instructions 755 executable by a computer processor to determine characteristics of a radio-frequency (RF) neighborhood for the first AP based on the information associated with the second AP. As described above, characteristics of the RF neighborhood may include channel usage information, equivalent isotropically radiated power information, transmit power information, and/or radio media access control address information.

In some examples, the example medium 752 may store instructions executable by a computer processor to broadcast information associated with the first AP to the second AP and another AP among the plurality of APs. For example, as shown in Figure 6, the first AP may broadcast information to the second AP and to another AP among a plurality of APs in a wireless local area network.

The example medium 752 may further store instructions executable by a computer processor to broadcast information associated with the first AP to the second AP without transmitting a service announcement frame from the first AP. In some examples, the first AP may include a scan request/response mechanism to broadcast the information from the first AP to the second AP, as described in more detail in connection with Figure 6, herein.

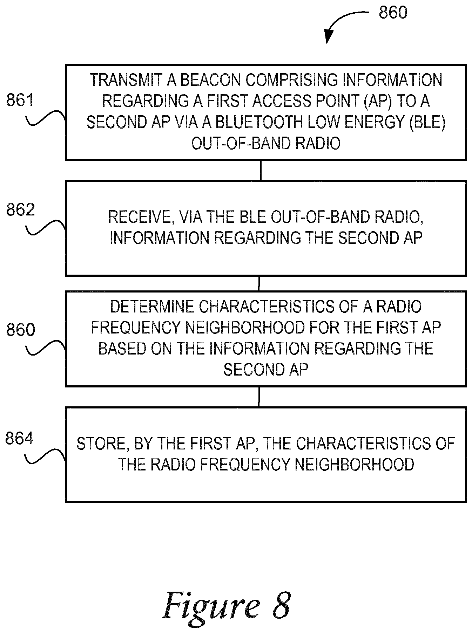

Figure 8 illustrates an example flow diagram of an example of a method 860 for an out-of-band radio consistent with the disclosure. At 861, the method 860 may include transmitting a beacon comprising information regarding a first access point (AP) to a second AP via a Bluetooth® low energy (BLE) out-of-band radio. The information may include channel usage information, equivalent isotropically radiated power information, transmit power information, and/or radio media access control address information.

At 862, the method 860 may include receiving, via the BLE out-of-band radio, information regarding the second AP. The information may include channel usage information, equivalent isotropically radiated power information, transmit power information, and/or radio media access control address information.

At 863, the method 860 may include determining characteristics of a radio frequency neighborhood for the first AP based on the information regarding the second AP. The characteristics may include channel usage information, equivalent isotropically radiated power information, transmit power information, and/or radio media access control address information associated with APs in the RF neighborhood.

At 864, the method 860 may include storing, by the first AP, the characteristics of the radio frequency neighborhood. For example, the first AP may include a memory resource that may store the characteristics of the radio frequency neighborhood and may use the characteristics of the radio frequency neighborhood to provide wireless connectivity to STAs that are authenticated to the first AP.

In some examples, the method 860 may include broadcasting the beacon, which may be received by a second AP and another AP. For example, as described above in connection with Figure 6, the beacon may be broadcasted to a plurality of APs that are in an RF neighborhood associated with the first AP.

In some examples, the method 860 may include transmitting the information without connecting (e.g., without explicitly forming a connection from) the first AP to the second AP. For example, the beacon may be transmitted without creating a tunnel between the first AP and the second AP. In some examples, the beacon may be transmitted without transmitting a service set identifier from the first AP to the second AP. Examples are not limited to transmitting the beacon without connecting the first AP to the second AP, and the beacon may be transmitted from the first AP to APs in the radio frequency neighborhood without connecting the first AP to any of the APs in the radio frequency neighborhood. In some examples, the exchange of information using the out-of-band BLE radio happens through the exchange of advertisement frames and/or scan request/response frames. In some examples, the scan request/response frames may be broadcasted by a scan response/request mechanism associated with the first AP and/or the second AP.

In the foregoing detailed description of the disclosure, reference is made to the accompanying drawings that form a part hereof, and in which is shown by way of illustration how examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the disclosure. As used herein, designators such as "N", etc., particularly with respect to reference numerals in the drawings, indicate that a number of the particular feature so designated can be included. A "plurality of" is intended to refer to more than one of such things. Multiple like elements may be referenced herein by their reference numeral without a specific identifier at the end. For example, a plurality of out-of-band radios 102-1, ..., 102-N may be referred to herein as out-of-band radios 102.

The figures herein follow a numbering convention in which the first digit corresponds to the drawing figure number and the remaining digits identify an element or component in the drawing. For example, reference numeral 102 may refer to element "02" in Figure 1 and an analogous element may be identified by reference numeral 202 in Figure 2. Elements shown in the various figures herein can be added, exchanged, and/or eliminated so as to provide a number of additional examples of the disclosure. In addition, the proportion and the relative scale of the elements provided in the figures are intended to illustrate the examples of the disclosure, and should not be taken in a limiting sense.

As used herein, "logic" is an alternative or additional processing resource to perform a particular action and/or function, etc., described herein, which includes hardware, for example, various forms of transistor logic, application specific integrated circuits (ASICs), etc., as opposed to computer executable instructions, for example, instructions, etc., stored in memory and executable by a processor.

## Claims

1. An apparatus, comprising:
an out-of-band radio; and
a processing resource coupled to the out-of-band radio, the processing resource to execute instructions to:
transmit information associated with the apparatus;
receive information associated with a neighboring network device; and
determine characteristics of a radio-frequency neighborhood of the apparatus based on the information associated with the neighboring network device.

2. The apparatus of claim 1, wherein the out-of-band radio is a BLUETOOTH low energy (BLE) out-of-band radio.

3. The apparatus of claim 1, wherein the processing resource to execute instructions to transmit the information associated with the apparatus comprises the processing resource to execute instructions to transmit channel usage information associated with the apparatus.

4. The apparatus of claim 1, wherein the processing resource to execute instructions to transmit the information associated with the apparatus comprises the processing resource to execute instructions to transmit equivalent isotropically radiated power information associated with the apparatus.

5. The apparatus of claim 1, wherein the processing resource to execute instructions to transmit the information associated with the apparatus comprises the processing resource to execute instructions to transmit information regarding a transmit power associated with the apparatus.

6. The apparatus of claim 1, wherein the processing resource to execute instructions to transmit the information associated with the apparatus comprises the processing resource to execute instructions to transmit a radio media access control address associated with the apparatus.

7. A non-transitory machine-readable storage medium having stored thereon machine readable instructions to cause a computer processor to:
broadcast, via a BLUETOOTH low energy (BLE) out-of-band radio coupled to a first access point (AP), information associated with the first AP to a second AP among a plurality of APs in a local area wireless network;
receive information associated with the second AP; and
determine characteristics of a radio-frequency neighborhood for the first AP based on the information associated with the second AP.

8. The non-transitory machine-readable medium of claim 7, wherein the machine readable instructions are to cause the computer processor to execute instructions to broadcast information associated with the first AP to the second AP and another AP among the plurality of APs.

9. The non-transitory machine-readable medium of claim 7, wherein the machine readable instructions are to cause the computer processor to broadcast information associated with the first AP to the second AP without transmitting a service announcement frame from the first AP.

10. The non-transitory machine-readable medium of claim 7, wherein the BLE out-of-band radio coupled to the first AP operates on an out-of-band channel of the first AP.

11. The non-transitory machine-readable medium of claim 7, wherein a BLE out-of-band radio coupled to the first AP operates in a channel gap between a first Wi-Fi channel and a second Wi-Fi channel of the first AP.

12. The non-transitory machine-readable medium of claim 7, wherein the first AP includes a scan request/response mechanism to broadcast the information from the first AP to the second AP.

13. A method, comprising:
transmitting a beacon comprising information regarding a first access point (AP) to a second AP via a BLUETOOTH low energy (BLE) out-of-band radio;
receiving, via the BLE out-of-band radio, information regarding the second AP;
determining characteristics of a radio frequency neighborhood for the first AP based on the information regarding the second AP; and
storing, by the first AP, the characteristics of the radio frequency neighborhood.

14. The method of claim 13, wherein transmitting the beacon further comprises broadcasting the beacon to the second AP and another AP.

15. The method of claim 13, wherein transmitting the beacon further comprises transmitting the beacon without connecting the first AP to the second AP.
